# EUROPEAN PATENT APPLICATION

(11) **EP 0 669 390 A2**
(43) Date of publication of application: **30.08.1995**
(21) Application number: 95850031.6
(22) Date of filing: 09.02.1995
(51) Int. Cl.: C10L 5/00, C10L 1/00, C01B 17/00

(54) **Combustion of sulphur**

(30) Priority: 10.02.1994 SE 9400430
(71) Applicant: KEMIRA KEMI AKTIEBOLAG, S-251 09 Helsingborg (SE)
(72) Inventor: Linnersund, Ulf, S-261 62 Glumslöv (SE)
(74) Representative: Inger, Lars Ulf Bosson

(57) **Abstract**

The present invention relates to the use of elementary sulphur as a fuel in internal combustion engines, for the production of energy and SO₂.

## Description

### Technical filed

The present invention relates to the use of sulphur as a fuel in internal combustion engines, in particular for the production of energy and sulphur based products.

The object of the present invention is primarily to obtain a possibility to be able to utilize the energy content of sulphur in a more rational way

Further objects and advantages will be apparent from the following description.

### Background of the invention

At the production of sulphur based products today, such as SO₂, SO₃, oleum, sulphuric acid, sulphites, bisulphites, hydrosulphites, sulphates, and other sulphur compounds one starts from sulphur containing pyrites, iron pyrites, which is roasted, whereby heat energy and sulphur dioxide is obtained, or elementary sulphur is combusted, whereby heat energy and sulphur dioxide is obtained. The heat energy is recovered as a high temperature steam, which can be transferred to electrical energy in a steam turbine, and/or be utilized for heating in industrial applications or in heat energy plants. The sulphur dioxide, SO₂, is utilized as such, is cooled and compressed to liquid state, or is further oxidized to SO₃ for the formation of sulphuric acid or derivatives thereof. At all conversions from one energy state to another losses occur and the efficiency ratio at the recovery of the energy contents is low.

A more efficient way of utilizing the energy contents is thus required.

### Description of the present invention

It has now surprisingly turned out to be possible to meet this requirement and to utilize elementary sulphur as a fuel in internal combustion engines, whereby the energy obtained can be transferred via the outgoing shaft to an electricity producing generator, whereby the efficiency is increased.

One can thereby utilize the sulphur as a lubricant in the internal combustion engine in question as well, by feeding it as a lubricant to different points to be lubricated.

Thereby, it has also turned out possible to utilize the sulphur as a lubricant in such engines (piston-cylinder-lubrication) at a substoichiometric combustion, as well as it has turned out possible to be able to utilize the elementary sulphur as a lubricant in pumps and engine bearings such as crankshaft bearings and bearings at the outgoing shaft connected thereto.

By carrying out the combustion with an excess of elementary sulphur, i.e. substoichiometrical, the combustion temperature can be lowered and thereby the formation of so called NOₓ.

The use of elementary sulphur for the cooling of the engine block of an internal combustion engine is a further suitable embodiment of the present invention.

By means of the present invention the investment need in new plants for sulphur combustion is reduced and one may utilize older engines, such as ship diesel engines, which are discarded one after the other as the breaking up of old ships.

The term internal combustion engines means here and in the following primarily diesel engines, but also other combustion engines are contemplated such as Otto engines, or gas turbine engines.

At the application of the present invention the elementary sulphur is cleaned in a conventional manner to free the same from sand, acids, and H₂S. Hereby, common filtering techniques are utilized. The filtration takes place having the sulphur in molten state, and this can then be transferred directly to the injection system of the combustion engine, where a temperature of above 135°C, but not preferably above 155°C, is maintained, in order to keep the sulphur liquid and with a low viscosity. Further, the temperature can be higher than 190°C, as the viscosity of the sulphur then is suitable again. Sulphur shows a pronounced viscosity peak around 160°C. Elementary sulphur has a low self-ignition temperature, about 260°C or somewhat higher, depending on purity.

The use of elementary sulphur further leads to the advantage that the ingoing elementary sulphur can be heat exchanged against the outgoing gases, whereby the temperature of the latter can be reduced and the efficiency can be improved.

In all combustion in a diesel engine using a conventional fuel, diesel oil or compositions thereof, sot is obtained, which reduces the efficiency and contaminates the surrounding environment.

At the combustion in a diesel engine using sulphur a sot-free, and a CO₂-free exhaust gas, whereby the pollution load of CO₂ content of the environment is eliminated, as well as the sot problem. This creates a better energy utilization.

The SO₂ content of the outgoing exhaust gas at the use of air as source of oxygen, can be up to 20.8%, preferably 17 to 18% and can thus be utilized in a conventional manner, either for the production of SO₂ products or for the oxidation in a contact oven for the production of SO₃ and products thereof. As the exhaust gases are clean, i.e. free from sot and CO₂, the contact mass of the contact oven, which mass contains a catalyst based on vanadium, is neither destroyed. This is per se not an additional effect compared with a conventional combustion of elementary sulhpur in a sulphur combustion plant of the conventional type, but is nevertheless noteworthy.

Above, it has been noted that air can be used as a source of oxygen at the combustion, but oxygen enriched air, as well as pure oxygen can be used.

The oxidation of sulphur dioxide, SO₂, follows completely conventional methods for SO₂, whereby the temperatures and concentrations of SO₂ to the different steps of the contact oven shall be observed.

It is apparent that particular steps and precautions have to be taken in order to keep the elementary sulphur liquid when the engine is not running. This can simply be made by keeping a cooling water circle under pressure, where heat is added externallyand where the temperature can be kept at or above 120°C.

It is also apparent that the internal combustion engine has to be cooled, whereby the heat can be recovered as a low-pressure steam or hot water, which is superior to conventional methods at combustion engines. This reduces the heat exchange surfaces needed, which reduces the investment requirements, and further, the value of the cooled off heat is increased, whereby it is possible to deliver district heating or replace the production of low-pressure steam.

## Claims

1. The use of elementary sulphur as a fuel in internal combustion engines, for the production of energy and SO₂.

2. The use according to claim 1, whereby the combustion engine is a diesel engine.

3. The use according to claim 1, wherein the combustion engine is an Otto-engine.

4. The use according to claim 1, wherein the combustion engine is a gas turbine engine.

5. The use of elementary sulphur as a lubricant in a combustion engine.

6. The use of elementary sulphur as a lubricant in a combustion engine, whereby substoichiometric combustion is maintained.

7. The use of elementary sulphur as a lubricant in equipment for a combustion engine.

8. The use of elementary sulphur for the cooling of the engine block of a combustion engine.

9. The use according to claim 1-7, wherein the ingoing elementary sulphur is heat exchanged against outgoing exhaust gases, whereby the temperature of these is reduced and the efficiency is increased.

10. The use according to claim 1-8, wherein SO₂ obtained is further processed for the production of SO₂ products, SO₃, oleum, sulphuric acid, sulphites, bisulphites, hydrosulphites, sulphates, and other sulphur compounds.

11. The use of oxygen or oxygen enriched air at the combustion according to claims 1-4.
